# DEMANDE DE BREVET EUROPEEN

(11) **EP 2 745 669 A1**
(43) Date de publication de la demande: **25.06.2014**
(21) Numéro de dépôt: 13196927.1
(22) Date de dépôt: 12.12.2013
(51) Int. Cl.: A01D 46/28, A01D 67/04, A01D 46/24

(54) **Véhicule motorisé pour la récolte de grappes de raisins**

(30) Priorité: 21.12.2012 FR 1262733
(71) Demandeur: Marin, Augustin, 56340 Carnac (FR)
(72) Inventeur: Marin, Augustin, 56340 Carnac (FR)
(74) Mandataire: Roman, Alexis

(57) **Abrégé**

L'invention concerne un véhicule motorisé pour la récolte de grappes de raisins, ledit véhicule comportant un châssis (10) sur lequel sont agencés : - un fauteuil (2) comprenant une assise (20) pour asseoir un cueilleur, - une benne (3) de stockage des grappes de raisins cueillies, - des moyens (4) de roulage motorisés pour déplacer ledit véhicule, - des organes de manoeuvre (5) pour commander le déplacement dudit véhicule,
se caractérisant par le fait que la largeur totale du véhicule (1) est comprise entre 80 cm et 120 cm, le fauteuil (2) est installé sur le châssis (10) de manière à ce que son assise (20) soit située à une hauteur comprise entre 20 cm et 100 cm par rapport au sol, la benne (3) est située à moins de 50 cm de ladite assise,
et par le fait que le fauteuil (2) est monté mobile en rotation sur le châssis (10) selon un axe vertical, l'angle de rotation étant suffisant pour permettre audit fauteuil de se positionner perpendiculairement au sens de déplacement du véhicule (1), vers la droite comme vers la gauche, les organes de manoeuvre (5) étant solidaires dudit fauteuil de sorte qu'ils pivotent en même temps que lui.

## Description

### Domaine technique de l'invention.

L'invention a pour objet un véhicule motorisé pour la récolte de grappes de raisins.

L'invention concerne le domaine technique des véhicules motorisés utilisés pour récolter des grappes de raisins sur pieds de vignes, et plus particulièrement les véhicules conçus pour progresser dans un champ de vignes.

### État de la technique.

Les champs de vignes sont généralement formés d'une succession de rangées de vignes parallèles accolées les unes aux autres.

De manière traditionnelle, des vendangeurs/coupeurs progressent à pied et en ligne entre les rangées pour récolter manuellement les grappes de raisins. Des porteurs munis de hottes récupèrent les grappes récoltées, et les acheminent à l'extérieur des rangées pour les verser dans un conteneur approprié : bannes, cagettes, etc. Ce travail manuel de la vigne offre entre autre avantage de respecter l'intégrité des grains de raisins et de pouvoir sélectionner uniquement les grappes jugées matures. Cependant, la tâche est laborieuse non seulement pour les coupeurs qui doivent se baisser et courber le dos pour récolter les grappes, que pour les porteurs qui font des va-et-vient systématiques dans les rangées.

On connait par les documents brevets ES 2.228.237 (MAQUINARIA GUAL) ou US 6.070.402 (KORTHUIS), des véhicules motorisés capables de circuler entre les rangées de vignes pour récolter automatiquement les grappes. Ces véhicules comportent habituellement un châssis complexe en forme de portique configuré pour se positionner au dessus d'une rangée de vignes, les roues étant disposées de part et d'autre de ladite rangée. Un outil de cueillette mécanique spécifique est installé au milieu du châssis pour récolter et stocker automatiquement les raisins dans une benne embarquée. Les récoltes avec ces véhicules sont moins coûteuses en temps et en main d'oeuvre que les vendanges manuelles. Toutefois, l'utilisation d'un outil de cueillette mécanique est susceptible d'altérer l'intégrité physique des grains de raisins et ne permet pas de distinguer précisément les grappes matures des grappes immatures.

Le document EP 1.449.421 (TOLAINI) concerne un véhicule motorisé pour la taille de la vigne. Ce véhicule permet de tracter un conteneur destiné à recevoir les résidus de la taille. Ce conteneur est attelé au véhicule. Un hacheur est combiné au conteneur pour broyer les résidus en particules plus petites. Ce conteneur n'est pas utilisé pour le stockage de grappes de raisins. En tendant le bras, on image au mieux que le conducteur atteigne le hacheur. En tout état de cause, les organes de manoeuvre sont solidaires du plancher sur lequel est installé le fauteuil : lorsque ce dernier pivote selon son axe vertical, la pédale reste fixe. En résumé, non seulement ce véhicule est inadapté à la récolte des grappes de raisins, mais son utilisation peut être pénible pour le conducteur.

Dans le document US 3.236.329 (PRICE), le fauteuil ne peut être manipulé que d'un côté du véhicule. En outre, la benne décrite dans ce document est tellement encombrante que ce véhicule ne peut raisonnablement circuler entre des rangées de vignes.

Le document US 3.485.026 (DAVIS) concerne un véhicule permettant une récolte mécanisée de fruits. Compte tenu de la fragilité des grappes de raisins, on imagine mal vendanger des vignes avec l'appareil décrit dans ce document.

L'invention vise à remédier à cet état des choses. En particulier, un objectif de l'invention est de proposer un véhicule motorisé pour la récolte de grappes de raisins, qui puisse facilement circuler dans des rangées de vignes.

Un autre objectif de l'invention est de proposer un véhicule motorisé dont l'utilisation par un cueilleur permet de conserver tous les avantages d'une vendange manuelle.

### Divulgation de l'invention.

La solution proposée par l'invention est un véhicule motorisé pour la récolte de grappes de raisins, ledit véhicule comportant un châssis sur lequel sont agencés : - un fauteuil comprenant une assise pour asseoir un cueilleur, - une benne de stockage des grappes de raisins cueillies, - des moyens de roulage motorisés pour déplacer ledit véhicule, - des organes de manoeuvre pour commander le déplacement dudit véhicule. Ce véhicule est remarquable en ce que :
- la largeur totale du véhicule est comprise entre 80 cm et 120 cm, le fauteuil est installé sur le châssis de manière à ce que son assise soit située à une hauteur comprise entre 20 cm et 100 cm par rapport au sol, la benne est montée sur le châssis et est située à moins de 50 cm de ladite assise de sorte que le cueilleur ait juste à tendre le bras pour y déposer la grappe qu'il vient de couper,
- le fauteuil est monté mobile en rotation sur le châssis selon un axe vertical, l'angle de rotation étant suffisant pour permettre audit fauteuil de se positionner perpendiculairement au sens de déplacement du véhicule, vers la droite comme vers la gauche, les organes de manoeuvre étant solidaires dudit fauteuil de sorte qu'ils pivotent en même temps que lui,
- la longueur de la benne est comprise entre 50 cm et 150 cm, la largeur de ladite benne est égale à celle du véhicule et la profondeur de ladite benne est comprise entre 30 cm à 60 cm.

Ce véhicule est spécifiquement dimensionné pour circuler entre deux rangées de vignes parallèles. Le cueilleur peut donc l'utiliser pour progresser aisément et rapidement dans le vignoble, sans se fatiguer. De plus, le cueilleur est positionné de manière à ce qu'il puisse atteindre les grappes de raisins tout en restant assis dans le véhicule. Le fauteuil pivotant lui permet en outre de facilement récolter les grappes qui sont de chaque côté du véhicule, sans avoir à solliciter son dos et/ou à tourner son bassin : le cueilleur peut ainsi effectuer sa récolte en restant dans son véhicule mais en se plaçant face à la vigne. De même, il peut commander le déplacement du véhicule tout en restant placé face à la vigne. Ces caractéristiques agissent en synergie pour diminuer la durée de vendange tout en réduisant la main d'oeuvre, la qualité de la récolte et l'intégrité des raisins étant maintenues par rapport à une récolte manuelle traditionnelle.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un véhicule conforme à l'invention,
- la figure 2 montre le véhicule de la figure 1 où la benne de stockage en position relevée,
- la figure 3 montre un véhicule conforme à l'invention où le fauteuil et les organes de manoeuvre ont pivoté pour se positionner perpendiculairement au sens de déplacement,
- la figure 4 montre un véhicule conforme à l'invention équipé d'un panneau solaire photovoltaïque formant pare-soleil.

### Modes préféré de réalisation de l'invention.

Le véhicule objet de l'invention est destiné à circuler entre deux rangées de vignes (et non pas au dessus d'une rangée comme cela est le cas des véhicules décrits dans les documents brevets ES 2.228.237 ou US 6.070.402 précités). Il est conçu pour être conduit par un cueilleur et lui permettre d'effectuer la récolte des grappes de raisins tout en restant assis dans le véhicule.

En se rapportant aux figures annexées, le véhicule 1 comprend un châssis 10 sur lequel sont montés : un fauteuil 2 pour asseoir un cueilleur C ; - une benne 3 pour le stockage des grappes de raisins cueillies, - des moyens de roulage motorisés 4, - des organes de manoeuvre 5.

Le châssis 10 est préférentiellement métallique, en plastique ou en fibres de carbone, et composé d'éléments rigides mécano-soudés. Il est situé proche du sol, préférentiellement à une hauteur comprise entre 5 cm et 20 cm. Sa largeur est comprise entre 80 cm et 120 cm et correspond à la largeur totale du véhicule 1. Sa longueur est d'environ 200 cm et correspond sensiblement à la longueur totale du véhicule 1.

Les moyens de roulage motorisés 4 peuvent être des roues. On préfère toutefois utiliser des chenilles de manière à ce que le véhicule 1 puisse facilement se déplacer sur tous types de terrains, quelles que soient les conditions, notamment par temps de pluie. Ces chenilles 4 sont disposées de part et d'autre du châssis 10. Elles ont une hauteur comprise entre 20 cm et 50 cm de manière à ne pas trop surélever le châssis 10 par rapport au sol.

Les chenilles 4 peuvent être actionnées par un unique moteur commun. Pour optimiser la capacité de manoeuvre du véhicule 1, il est toutefois préférable que chaque chenille 40 soit actionnée par un moteur électrique qui lui est dédié.

La motorisation consiste en un, préférentiellement deux moteurs électriques. Ce type de motorisation n'est pas polluant et ne risque pas d'altérer le goût des raisins cueillis, contrairement aux rejets des gaz d'échappement des moteurs thermiques. L'utilisation de ces derniers n'est toutefois pas proscrite. Les moteurs électriques sont associés à des batteries, l'ensemble pouvant être logé dans un ou plusieurs compartiments 11 situés à l'arrière et/ou à l'avant du châssis 10. Des phares avant et éventuellement arrière (non représentés) peuvent être montés sur le châssis 10 et alimentés par les batteries.

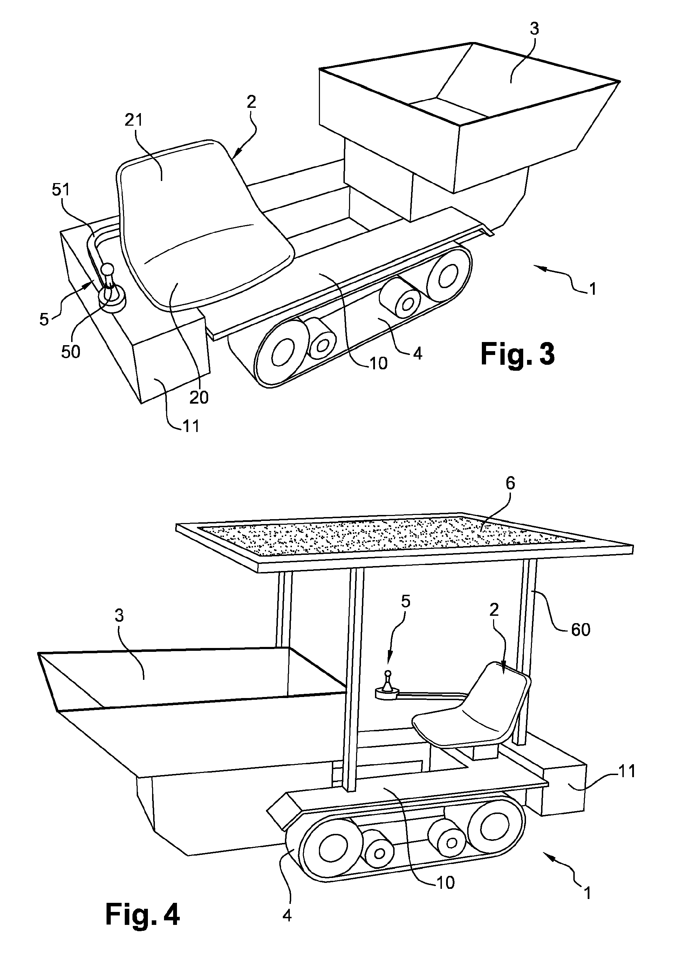

Comme cela apparait sur la figure 4, les batteries sont avantageusement couplées à un panneau solaire photovoltaïque 6 permettant de les recharger. Ce panneau 6 peut être agencé à l'arrière du véhicule 1 mais il est avantageusement installé au dessus du fauteuil 2, sur une structure 60 fixée au châssis 10, de manière à former un pare-soleil. Selon le mode préféré de réalisation qui est illustrée sur la figure annexée, la structure 60 est formée de plusieurs montants verticaux répartis autour du fauteuil 2 et supportant un cadre horizontal sur lequel est fixé le panneau 6. Ce dernier est situé à une hauteur comprise entre 150 cm et 200 cm par rapport au sol. Sa largeur et sa longueur peuvent correspondre à celles du châssis 10, et plus généralement à celles du véhicule 1. Toutefois, la longueur du panneau 6 peut être plus courte à partir du moment où le cueilleur/conducteur est protégé du soleil et/ou de la pluie. Une longueur d'environ 150 cm peut notamment être envisagée.

Le fauteuil 2 comprend une assise 20 et éventuellement un dossier 21. L'assise 20 est située à une hauteur comprise entre 20 cm et 100 cm par rapport au sol, préférentiellement 40 cm. Le cueilleur C est donc assis relativement proche du sol, et en tout état de cause, à une hauteur qui correspond à celle de la majorité des vignes. Il lui est donc aisé d'appréhender les grappes tout en restant assis sur le fauteuil 2.

Le fauteuil 2 est monté mobile en rotation sur le châssis 10 selon un axe vertical. L'assise 20 est par exemple installée à l'extrémité d'un tube cylindrique vertical monté en rotation dans un fût fixé au châssis 10, il peut s'agir d'un vérin permettant en outre de régler sa hauteur. Comme cela apparait sur la figure 3, l'angle de rotation du fauteuil 2 est suffisant pour lui permettre de se positionner perpendiculairement au sens de déplacement du véhicule 1, vers la droite comme vers la gauche. Pour apporter davantage de confort au cueilleur, il est toutefois avantageux que le fauteuil 2 puisse pivoter à 360°.

Les organes de manoeuvre 5 permettent commander le déplacement du véhicule 1 ainsi que la manipulation de la benne 3. Ces organes 5 sont solidaires du fauteuil 2 de sorte qu'ils pivotent en même temps que lui. Le cueilleur peut donc facilement commander l'avancement (ou le recul) du véhicule 1, tout en restant face à la vigne, c'est-à-dire perpendiculaire à la direction de déplacement du véhicule. Sur les figures annexées, les organes de manoeuvre 5 consistent en des boutons et/ou manettes actionnables manuellement, lesquels boutons et/ou manettes sont disposés sur un boîtier 50 solidaire d'un bras 51 qui est fixé au fauteuil 2. Le bras 51 est avantageusement articulé de manière à ce que le cueilleur C puisse régler la position du boîtier 50 pour actionner les boutons et/ou manettes confortablement.

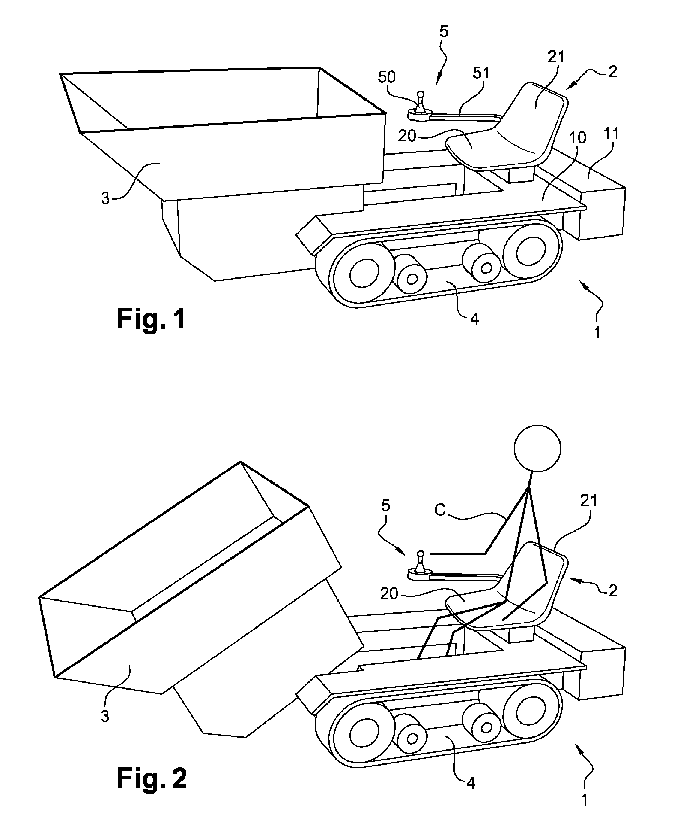

Sur les figures annexées, la benne 3 est située à proximité du fauteuil 2 de sorte que le cueilleur ait juste à tendre le bras pour y déposer la grappe qu'il vient de couper. Pour ce faire, la benne 3 est située à moins de 100 cm, préférentiellement moins de 50 cm de l'assise 20. Selon le mode préféré de réalisation illustré, la benne 3 consiste en un bac parallélépipédique ouvert sur sa face supérieure et disposée à l'avant du véhicule 1. Elle est avantageusement constituée d'une tôle métallique emboutie, ou de plusieurs tôles soudées ou rivetées. On pourrait toutefois prévoir de l'installer à l'arrière. A titre d'exemple, sa longueur est comprise entre 50 cm et 150 cm, sa largeur égale à celle du véhicule 1 et sa profondeur comprise entre 30 cm à 60 cm. Comme cela apparait sur la figure 2, la benne 3 est montée mobile entre une position de remplissage où elle est à l'horizontale et une position de vidage où elle bascule vers l'avant, pratiquement à la verticale. Dans cette position, les grappes de raisins sont automatiquement évacuées de la benne 3 par gravité. Pour faciliter l'écoulement, la paroi avant de la benne 3 est légèrement inclinée. En pratique, la benne 3 est montée en rotation sur un axe horizontal fixé sur le châssis 10, un vérin permettant de la manipuler. Il est également envisagé d'articuler la benne 3 selon deux autres axes horizontaux agencés de manière à pouvoir faire basculer ladite benne latéralement, vers la droite ou vers la gauche.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention.

## Revendications

1. Véhicule motorisé pour la récolte de grappes de raisins, ledit véhicule comportant un châssis (10) sur lequel sont agencés : - un fauteuil (2) comprenant une assise (20) pour asseoir un cueilleur (C), - une benne (3) de stockage des grappes de raisins cueillies, - des moyens (4) de roulage motorisés pour déplacer ledit véhicule, - des organes de manoeuvre (5) pour commander le déplacement dudit véhicule,
**se caractérisant par le fait que** la largeur totale du véhicule (1) est comprise entre 80 cm et 120 cm, le fauteuil (2) est installé sur le châssis (10) de manière à ce que son assise (20) soit située à une hauteur comprise entre 20 cm et 100 cm par rapport au sol, la benne (3) est montée sur le châssis (10) et est située à moins de 50 cm de ladite assise de sorte que le cueilleur (C) ait juste à tendre le bras pour y déposer la grappe qu'il vient de couper,
**par le fait que** le fauteuil (2) est monté mobile en rotation sur le châssis (10) selon un axe vertical, l'angle de rotation étant suffisant pour permettre audit fauteuil de se positionner perpendiculairement au sens de déplacement du véhicule (1), vers la droite comme vers la gauche, les organes de manoeuvre (5) étant solidaires dudit fauteuil de sorte qu'ils pivotent en même temps que lui,
**et par le fait que** la longueur de la benne (3) est comprise entre 50 cm et 150 cm, la largeur de ladite benne est égale à celle du véhicule et la profondeur de ladite benne est comprise entre 30 cm à 60 cm.

2. Véhicule selon la revendication 1, **dans lequel** les moyens de roulage (4) sont actionnés par au moins un moteur électrique associé à des batteries, lesquelles batteries sont couplées à un panneau solaire photovoltaïque (6) pour les recharger.

3. Véhicule selon la revendication 2, **dans lequel,** le panneau solaire photovoltaïque (6) est installé au dessus du fauteuil (2), sur une structure (60) fixée au châssis (10), de manière à former une protection contre le soleil et/ou contre la pluie.

4. Véhicule selon l'une des revendications précédentes, **dans lequel** les moyens (4) de roulage sont des chenilles disposées de part et d'autre du châssis (10), chaque dite chenille étant actionnée par un moteur électrique qui lui est dédié.

5. Véhicule selon la revendication 4, **dans lequel** les chenilles (4) ont une hauteur comprise entre 20 cm et 50 cm.

6. Véhicule selon l'une des revendications précédentes, **dans lequel** le fauteuil (2) est monté sur un vérin de manière à ce que sa hauteur soit réglable.

7. Véhicule selon l'une des revendications précédentes, **dans lequel** le châssis (10) est situé à une hauteur comprise entre 5 cm et 20 cm par rapport au sol.

8. Véhicule selon l'une des revendications précédentes, **dans lequel** les organes de manoeuvre (5) consistent en des boutons et/ou manettes actionnables manuellement, lesquels boutons et/ou manettes sont disposés sur un boîtier (50) solidaire d'un bras (51) qui est fixé au fauteuil.
